(19) **Europäisches Patentamt European Patent Office Office européen des brevets**

(11) **EP 3 715 740 B1**

(12) **EUROPEAN PATENT SPECIFICATION**

(45) Date of publication and mention of the grant of the patent:
**16.10.2024 Bulletin 2024/42**

(21) Application number: **19166224.6**

(22) Date of filing: **29.03.2019**

(51) International Patent Classification (IPC):
*F24F 11/80* (2018.01)     *F24F 11/86* (2018.01)
*F25B 49/02* (2006.01)     *F24F 11/62* (2018.01)

(52) Cooperative Patent Classification (CPC):
**F24F 11/80; F24F 11/62; F24F 11/86;**
F24F 2110/10; F24F 2130/20; F24F 2140/20;
F25B 49/022; F25B 2600/0253; Y02A 30/272;
Y02B 10/20; Y02B 30/70

(54) **METHOD, HEAT PUMP SYSTEM AND HVAC SYSTEM**

VERFAHREN, WÄRMEPUMPENSYSTEM UND HLK-SYSTEM

PROCÉDÉ, SYSTÈME DE POMPE À CHALEUR ET SYSTÈME CVC

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.09.2020 Bulletin 2020/40**

(73) Proprietors:
- **Mitsubishi Electric R&D Centre Europe B.V.**
  **Livingston EH54 5DJ (GB)**
  Designated Contracting States:
  **GB**
- **Mitsubishi Electric Corporation**
  **Tokyo 100-8310 (JP)**
  Designated Contracting States:
  **AL AT BE BG CH CY CZ DE DK EE ES FI FR GR HR HU IE IS IT LI LT LU LV MC MK MT NL NO PL PT RO RS SE SI SK SM TR**

(72) Inventor: **WU, Duan**
**Livingston, EH54 5DJ (GB)**

(74) Representative: **Pfenning, Meinig & Partner mbB**
**Patent- und Rechtsanwälte**
**Theresienhöhe 11a**
**80339 München (DE)**

(56) References cited:
**WO-A1-2018/199167**     **US-A- 5 499 511**
**US-A- 5 765 383**     **US-A1- 2019 030 992**
**US-B1- 10 203 674**

**Description**

The invention relates to a method for operating a heat pump system, a heat pump system and an HVAC system measuring a solar irradiance, wherein the operation of the heat pump is adjusted based on the solar irradiance.

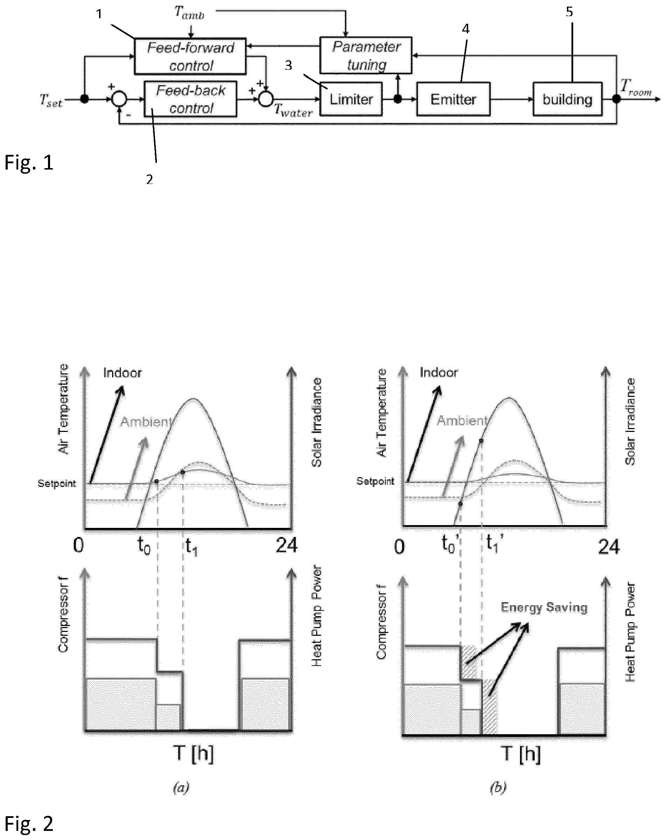

In recent years heat pump systems have become very popular mainly due to their high efficiency. They are therefore regarded as a key renewable solution for zero energy houses. In conventional heat pump systems the heat pump is usually controlled based on an indoor air temperature measurement as shown in Fig. 1. A set indoor temperature $T_{set}$ is input into the control procedure and feed-forward control 1 as well as feed-back control 2 are employed to achieve a target flow temperature of a heat transport medium flowing in the heat pump system. An ambient temperature $T_{amb}$ enters the feed-forward control. The target flow temperature then is usually input into a limiter 3 and the resulting target flow temperature limited of power is input into an emitter 4 which outputs a supplied flow temperature being provided to the building 5 resulting in a room temperature $T_{room}$.

The heating control comprises two parts, the feed-forward control (FF control) 1 as well as the feed-back control (FB control) 2. These are commonly implemented in heat pump systems. Preferably the feed-forward control calculates the target flow temperature $T_{water}$ using the set room temperature $T_{set}$ and the ambient temperature $T_{amb}$. The feed-back control calculates an adjustment value of the target flow temperature $T_{water}$ using a deviation between the target room temperature $T_{set}$ and a measured room temperature.

WO 2018/199167 A1 describes an air conditioning device which not only measures the air temperature but also a solar irradiance to predict temperature changes.

US 2019/0030992 A1 describes heat pump system for a car which measures solar irradiance and uses the solar irradiance for temperature control.

US 5,765383 relates to an air conditioner for an automobile having a sun shine sensor which is used to control the temperature in the car.

Usually the room temperature is measured for example by a wireless remote controller, the location of which varies in actual applications. This results into an uncertainty of the room temperature measurements in terms of delay due to the non-uniformity of the indoor temperature, caused for example by solar flux near the fenestration. Furthermore, conventional heating systems tend to overheat a room due to the limitation of feed-back control and the nature of solar gain to a house.

It is therefore the problem to be solved by the present invention to improve the temperature control of a heat pump in case of solar irradiation onto a building.

This problem is solved by the method for operating a heat pump system according to claim 1, the heat pump system according to claim 9 and the heating, ventilation and air conditioning, HVAC, according to claim 13.

The present invention relates to a method for operating a heat pump system.

The method according to the invention can in principle be applied to any kind of heat pump system. Such a heat pump system for example comprises a heat pump as well as a heat transport medium circuit, conducting a heat transport medium. The heat transport medium can be heated or cooled by the heat pump. The heat pump can for example comprise a refrigerant circuit in which a condenser, an expansion valve, an evaporator and a compressor are connected to each other in series by refrigerant conduits. It should be stressed that the configuration of the heat pump is not essential for the invention. The invention can be applied to all means for heating or cooling rooms. Here the term "heat pump" shall stand for a device heating an indoor room as well as a device for cooling an indoor room. The term "air conditioner" can also be used.

The method for operating a heat pump system according to the invention comprises measuring a solar irradiance incident onto a building. The solar irradiance can be measured by a suitable sensor. Since solar light impinges onto earth in a homogenous distribution a localized measurement of the solar irradiance is usually sufficient. The total energy brought into a building by solar irradiance can than be determined based on this localised measurement together with an effective model of the building. Where reference is made to solar irradiance, alternative terms can be used, as for example solar flux and solar energy density.

The method of the present invention then adjusts an operation of a heat pump included in the heat pump system based on the measured solar irradiance. Preferably the operation of the heat pump is adjusted only when the solar irradiation is larger than a predetermined threshold.

In a preferred embodiment of the invention the operation of the heat pump can be adjusted using feed-forward control and/or feed-back control. In this case, a temperature correction amount $\Delta T$ can be calculated based on the measured solar irradiation to adjust quantities which enter the feed-forward control and/or the feed-back control.

One quantity which can preferably be adjusted by the temperature correction $\Delta T$ is the target flow temperature of the heat pump. This is for example the designated temperature of a heat transfer medium which is heated by the heat pump. The feed-forward control and/or the feed-back control aim to achieve the target flow temperature. Thus, if this value is changed also the operation of the heat pump is changed. As solar irradiation enters energy into a building, an increased solar irradiation preferably results in a reduction of the target flow temperature.

A further quantity which can be advantageously used to adjust the operation of the heat pump is the air temperature set point of an indoor air temperature. This is the temperature which is desired within the room. It is set for example at a thermostat. If solar irradiation introduces energy into a room, less heat is to be provided by the heat pump. If the heat pump is controlled using feed-forward control and/or feed-back control, this can be achieved by reducing the actually set temperature by the temperature correction $\Delta T$. Thus, a user will set a certain temperature $T_{indoor\,sp}$ but an adjusted value $T_{indoor\,sp} - \Delta T$ enters the feed-forward and the feed-back control.

In an advantageous embodiment of the invention the operation of the heat pump can be adjusted by adjusting the operating frequency of a compressor included in the heat pump. The higher the operating frequency is, the higher is the amount of heat provided by the heat pump. Increased solar irradiance will therefore usually lead to a reduced operating frequency of the compressor.

In an advantageous embodiment of the invention the operation of the heat pump can be adjusted using feed-forward control and/or feed-back control, and can further comprise a step of comparing the measured solar irradiance $\Delta T$ to a predetermined threshold irradiance. By this step it can be ensured that adjustment is only performed if the solar irradiance is sufficiently significant.

The irradiance threshold $\phi_{threshold}$ can be set, for example, according to building properties such as fenestration (that is, the number and size of windows) and the thermal mass (which can, for example, be estimated using a standard such as the Standard Assessment Procedure SAP 2012).

If in this case the measured solar irradiance $\phi$ is equal or larger than the threshold irradiance a solar gain $Q_{solar}$ can be determined as $Q_{solar} = \alpha\phi$, wherein $\alpha$ is a solar aperture coefficient, which for example can be derived from TAITherm simulation results. It is then preferably possible to determine a flow temperature reduction $\Delta T$ as $\Delta T = Q_{solar} / (m\,C_p)$. Here m is a mass flow rate of a heat transfer fluid of the heat pump system, and $T_p$ is a specific heat capacity of the heat transfer medium of the heat pump system. The operation of the heat pump can then be adjusted by reducing the target flow temperature $T_{flow,\,supply}$ of the heat pump by $\Delta T$.

In a further preferred embodiment of the invention the operation of the heat pump can be adjusted using feed-forward control and/or feed-back control. In this embodiment the method can further comprise comparing the measured solar irradiance $\phi$ to a threshold irradiance. If the measured solar irradiance $\phi$ is equal to or larger than the threshold irradiance, a solar gain $Q_{solar}$ can be determined as $Q_{solar} = \alpha\phi$, wherein $\alpha$ is again the solar aperture coefficient. It is then preferably possible to determine an air temperature reduction as $\Delta T = Q_{solar} / M$, wherein M is a thermal mass of the building. The operation of the heat pump can then be adjusted by reducing the indoor temperature set point $T_{indoor\,sp}$ by $\Delta T$ and using the reduced indoor temperature set point in the feed-forward control and/or the feed-back control.

It is preferred to measure the solar irradiance by a solar irradiance sensor which is located on the outside of the building, preferably at a highest point of the building or at a spot of the building having an unobstructed view to the sun during the whole day.

It is preferable that the solar sensor has an unobstructed view for receiving sunlight in order to receive a maximum amount of solar irradiation. The solar sensor should therefore not be installed in a location that is shadowed by other buildings, trees, or other objects. It is particularly preferred to install the sensor on the top of the building or on a separate mounting close to the building. If the sensor needs to be installed on an external wall or window, it is preferred that this is the wall or window the receives the greatest amount of sunlight. In the northern hemisphere this would be, for example, a southward-facing wall or window.

Preferably the method of the present invention is carried out repeatedly, in particular preferrably at least once every hour, preferably at least once every fifteen minutes, in particular preferrably at least once every minute.

The present invention furthermore relates to a heat pump system comprising at least one heat pump as well as at least one sensor configured for measuring a solar irradiance onto a building. The heat pump can for example be configured as described above.

The heat pump system according to the invention furthermore comprises a controller which is configured to control an operation of the at least one heat pump based on an amount of solar irradiance measured by the at least one solar irradiance sensor.

It is in particular preferred if the controller is configured to adjust an operating frequency of a compressor included in the at least one heat pump. This controlling of the operating frequency of the compressor is then the control of the operation of the at least one heat pump based on the solar irradiation.

The solar irradiance sensor can for example be a silicon photo cell or a thermal pile type sensor. Silicon photocells are cheaper than thermopile-type sensors and are therefore preferred for the present invention.

It is particularly preferred if the heat pump is configured to carry out a method as described above.

The present invention also refers to an HVAC system including the heat pump system described above.

In the following the invention will be described by way of examples with reference to figures. The features described in the context of the examples can also be realized independently from the specific example.

Figure 1    shows a functional diagram of an auto-tuning-feed-forward control and feed-back control of the prior art,

Figure 2    shows the effect of the present invention,

Figure 3    shows a control diagram of a heat pump operating method in which the target flow temperature is adjusted,

Figure 4    shows a control algorithm for the flow temperature set point adjustment in Figure 3,

Figure 5    shows a control diagram of a heat pump operation in which the indoor temperature set point is adjusted, and

Figure 6    shows a control algorithm of the indoor temperature set point adjustment in Figure 5.

Calculating solar heat gain is a process that involves details about window size, orientation, shading, and material properties along with estimates of direct and indirect solar irradiance. Solar gain can be expressed by the Equations (1) - (6) [ASHRAE Research, ASHRAE Handbook-Fundamentals; Atlanta: ASHRAE 2017].

$$q_s = E_{DN} \cos(\theta)(T - NA)W_A \qquad (1)$$

$$SHGC(\theta, \lambda) = T(\theta, \lambda) - NA(\theta, \lambda) \qquad (2)$$

$$q_s = E_{DN} \cos(\theta) SHGC(\theta, \lambda) W_A \qquad (3)$$

$$SHGC(\theta) = T(\theta) - \sum_{k=1}^{L} N_k A_k \qquad (4)$$

$$q_s = I \times SHGC_e(\theta) \times AR_e \qquad (5)$$

$$\begin{aligned} \cos(\theta) = {} & \sin(\delta)\sin(\phi)\cos(\beta) - \sin(\delta)\cos(\phi)\sin(\beta) \\ & - \cos(\delta)\cos(\phi)\cos(\beta)\cos(\omega) \\ & - \cos(\delta)\sin(\phi)\sin(\beta)\cos(\gamma)\cos(\omega) \\ & - \cos(\delta)\sin(\beta)\sin(\gamma)\sin(\omega) \end{aligned} \qquad (6)$$

Since total solar readings were recorded normally and also in various data sources, it is necessary to split the total radiation into direct and diffuse components [2].

$$I/I_0 = 1.0 - 0.09\,k_T \text{ ,for } k_T \le 0.22 \qquad (7)$$

$$I/I_0 = 0.9511 - 0.1604\,k_T + 4.388\,k_T^2 - 16.638\,k_T^3 + 12.366\,k_T^4 \text{ , for } 0.22 < k_T \le 0.8 \qquad (8)$$

$$I/I_0 = 0.165\,, \ k_T > 0.8 \qquad (9)$$

In an advantageous embodiment the solar heat gain introduced into a building can be determined from the measured solar irradiance using a solar feed gain coefficient, SHGC, method.
Data that actually provided by a manufacturer of windows typically include:

- Number of layers - single pane, double or triple pane?
- Description of the glass type - coloration , whether or not it has low E coating
- U-factor (NFRC2004b)
- Solar Heat Gain Coefficient(SHGC) at normal incident angle
- Visual transmittance

Preferably, conduction heat gain is computed separately from the transmitted and absorbed solar heat gain. Because the thermal mass of glass is normally very low, the conduction is approximately steady state. Accordingly, the conduction heat gain may be calculated as:

$$q_{cond} = UA(T_{outdoor} - T_{indoor}) \qquad (10)$$

Transmitted and absorbed solar heat gains are advantageously calculated as follows:
1. Compute the incidence angle, surface azimuth angle, incident direct irradiation and diffuse irradiation on windows;
2. If exterior shading exists, determine sunlit area and shaded area;
3. For windows without shading, the beam and diffuse and total heat gain are given:

$$q_{SHG,Direct} = E_{Direct} A_{unshaded} SHGC(\theta) \qquad (11)$$

$$q_{SHG,Diffuse} = (E_{Diffuse} + E_{reflected}) A_{total} SHGC_{diffuse} \qquad (12)$$

$$q_{SHG,} = q_{SHG,Direct} + q_{SHG,Diffuse} \qquad (13)$$

where
$SHGC(\theta)$ is the angle dependent SHGC interpolated as in Table 1.

**Table 1 Window optical properties and SHGC**

| Angle | 0 | 10 | 20 | 30 | 9D | 50 | 60 | 70 | 80 | 90 | Hemispherical |
|---|---|---|---|---|---|---|---|---|---|---|---|
| Single pane, 3mm thick, clear | | | | | | | | | | | |
| $\tau_{sol}$ | 0.834 | 0.333 | 0.831 | 0.827 | 0.818 | 0.797 | 0.749 | 0.637 | 0.389 | 0 | 0.753 |
| $\alpha_1$ | 0.091 | 0.092 | 0.094 | 0.096 | 0.100 | 0.104 | 0.108 | 0.110 | 0.105 | 0 | 0.101 |
| SHGC | 0.859 | 0.859 | 0.857 | 0.854 | 0.845 | 0.825 | 0.779 | 0.667 | 0.418 | 0 | 0.781 |
| Double pane, both panes 3.2 mm thick with low e coating, inner pane 5.7mm thick | | | | | | | | | | | |
| $\tau_{sol}$ | 0.408 | 0.410 | 0.404 | 0.395 | 0.383 | 0.362 | 0.316 | 0.230 | 0.106 | 0 | 0.338 |
| $\alpha_1$ | 0.177 | 0.180 | 0.188 | 0.193 | 0.195 | 0.201 | 0.218 | 0.239 | 0.210 | 0 | 0.201 |
| $\alpha_2$ | 0.06 | 0.060 | 0.061 | 0.061 | 0.063 | 0.063 | 0.061 | 0.053 | 0.038 | 0 | 0.059 |
| SHGC | 0.469 | 0.472 | 0.466 | 0.459 | 0.448 | 0.428 | 0.382 | 0.291 | 0.152 | 0 | 0.400 |
| Double pane, both panes 5.7 mm thick, clear | | | | | | | | | | | |
| $\tau_{sol}$ | 0.607 | 0.606 | 0.601 | 0.593 | 0.577 | 0.546 | 0.483 | 0.362 | 0.165 | 0 | 0.510 |
| $\alpha_1$ | 0.167 | 0.168 | 0.170 | 0.175 | 0.182 | 0.190 | 0.200 | 0.209 | 0.202 | 0 | 0.185 |
| $\alpha_2$ | 0.113 | 0.113 | 0.115 | 0.116 | 0.118 | 0.119 | 0.115 | 0.101 | 0.067 | 0 | 0.111 |
| SHGC | 0.701 | 0.701 | 0.698 | 0.691 | 0.678 | 0.648 | 0.585 | 0.456 | 0.237 | 0 | 0.606 |

*Note: Data generated with the WINDOW program [4].*

Another advantageous method for calculating the solar heat gain is for example the overall solar aperture coefficient method.

This method is for example used in co-heating tests which involve the creation of a further whole building parameter, the solar aperture, ($A_{sol}$ (m$^2$)), defined by its use within the regression process and the measurement of incident solar radiation. The term $A_{sol}$ is well defined by P. Baker, "A retrofit of a Victorian terrace house in New Bolsover: a whole house thermal performance assessment," Historic England & Glasgow Caledonian University , 2015, which refers to the solar aperture as the 'heat flow rate transmitted through the building envelope to the internal environment under steady state conditions, caused by solar radiation incident at the outside surface, divided by the intensity of incident solar radiation in the plane of the building. It can be regarded as equivalent to a totally transparent area which lets in the same solar energy as the whole building'.

As the total heat flow across the building fabric cannot be measured directly, the co-heating method uses a simplified energy balance equation to infer heat loss as shown equation (14) in an unoccupied house.

$$Q_{active} + Q_{sol} = Q_{loss} \qquad (14)$$

$$Q_{active} + A_{sol} \cdot I_{sol} = HLC \cdot (T_{indoor} - T_{outdoor}) \qquad (15)$$

$$Q_{active} = HLC \cdot (T_{indoor} - T_{outdoor}) - A_{sol} \cdot I_{sol} \qquad (16)$$

$$\frac{Q_{active}}{T_{indoor} - T_{outdoor}} = -A_{sol} \cdot \frac{I_{sol}}{T_{indoor} - T_{outdoor}} + HLC \qquad (17)$$

$Q_{active}$ is the heat supplied either by electric or heat pump, W.

HLC is the heat loss coefficient, W/K.

Based on measured parameters and the *HLC* and $A_{sol}$ can be obtained in a long period of tests.

The value of $A_{sol}$ is a function of not only glazing characteristics of the dwelling but also its thermal mass.

A further advantageous method for determining the solar heat gain is the standard assessment procedure, SAP.

As described in BRE, The Government's Standard Assessment Procedure for Energy Rating of Dwellings (SAP 2012), Garston: BRE, 2017. Solar gains are calculated using solar flux from U3 in Appendix U and associated equations to convert to the applicable orientation.

$$G_{solar} = 0.9 \times A_w \times S \times g_{\perp} \times FF \times Z$$

Where

$G_{solar}$ is the average solar gain, W;
0.9 is the factor repenting the ratio of typical average transmittance to that at normal incidence;
$A_w$ is the area of an opening (a window or a glazed door), m2;
$S$ is the solar flux on the applicable surface, W/m2;
$g_{\perp}$ is the total solar energy transmittance factor of the glazing at normal incidence
FF is the frame factor for windows and doors (fraction of opening that is glazed);
Z is the solar access factor.

The factors can be estimated in Table 3 and Table 4..

**Table 2 Transmittance factors for glazing**

| Glazing Type | Total solar energy transmittance, $g_{\perp}$ | Light transmittance, $g_L$ |
|---|---|---|
| Single glazed | 0.85 | 0.9 |
| Double glazed (air or argon filled | 0.76 | |
| Double glazed (low-E, hard-coat) | 0.72 | 0.8 |
| Double glazed (low-E, soft-coat) | 0.63 | |
| Window with secondary glazing | 0.76 | |
| Double glazed (air or argon filled | 0.68 | |
| Double glazed (low-E, hard-coat) | 0.64 | 0.7 |
| Double glazed (low-E, soft-coat) | 0.53 | |

**Table 3 Frame factors**

| Frame Type | Frame Factor |
|---|---|
| Wood | 0.7 |
| Metal | 0.8 |
| Metal, thermal break | 0.8 |
| PVC-U | 0.7 |

*Note: if know the actual frame factor should be used instead of the data in the Table.*

**Table 2 Solar and light access factors**

| Overshading | % of sky blocked by obstacles | Winder solar access factor* | Summer solar access factor** | Light access factor |
|---|---|---|---|---|
| Heavy | >80% | 0.3 | 0.5 | 0.5 |
| More than average | >60% - 80% | 0.54 | 0.7 | 0.67 |
| Average or unknown | 20% - 60% | 0.77 | 0.9 | 0.83 |
| Very little | < 20% | 1.0 | 1.0 | 1.0 |

*Note: * for calculation of solar gains for heating.*
*** for calculation of solar gains for cooling and summer temperatures.*

Fig. 2 shows the effect of the present invention. Fig. 2(a) shows the air temperature and the solar irradiance throughout the day in the upper diagram and the compressor frequency and the heat pump power throughout the day in the lower diagram for a prior art heat pump control. Fig. 2(b) shows the air temperature and solar irradiance over the course of the day in the upper diagram and the compressor frequency and heat pump power over the day in the lower diagram for a heat pump system controlled according to the present invention.

In the upper diagrams of Figures 2(a) and 2(b) the full line indicates the solar irradiance, the short dashed line indicates the ambient temperature and the long dashed line indicates the set point indoor temperature. In the lower diagrams of Figures 2(a) and 2(b) the thick full lines indicate the heat pump power and the thin full lines indicate the compressor frequency.

The solar irradiance starts increasing with sunrise, reaches its maximum at noon and reaches zero at sunset.

As in the prior art the heat pump is controlled based on the measured indoor temperature, the compressor frequency in Fig. 2(a) is reduced at a time $t_0$ where the indoor temperature starts to increase. At a time $t_1$ the compressor is fully shut down if the indoor temperature reaches a certain value. The heat pump power follows the compressor frequency in the lower diagram of Fig. 2(a).

In Fig. 2(b) showing the effect of the invention the heat pump operation is controlled based on the measured solar irradiance. If at a time $t_0$' the solar irradiance increases above a threshold irradiance the compressor frequency f is reduced and at the same time the heat pump power is reduced. If at a time $t_1$' the solar irradiance increases above a further threshold the compressor frequency f is set to zero and correspondingly the heat pump power becomes zero. It can be seen in the upper diagram of Fig. 2(b) that the indoor temperature, represented by the full line, stays closer to the set point temperature indicated by the long dashed line than in the conventional control shown in the upper diagram of Fig. 2(a). Furthermore, it can be seen that the compressor frequency is reduced at the earlier times $t_0$' and $t_1$' than the times $t_0$ and $t_1$ in the conventional control method. Therefore, energy of the heat pump operation is saved as indicated by the hashed regions in the lower diagram of Fig. 2(b).

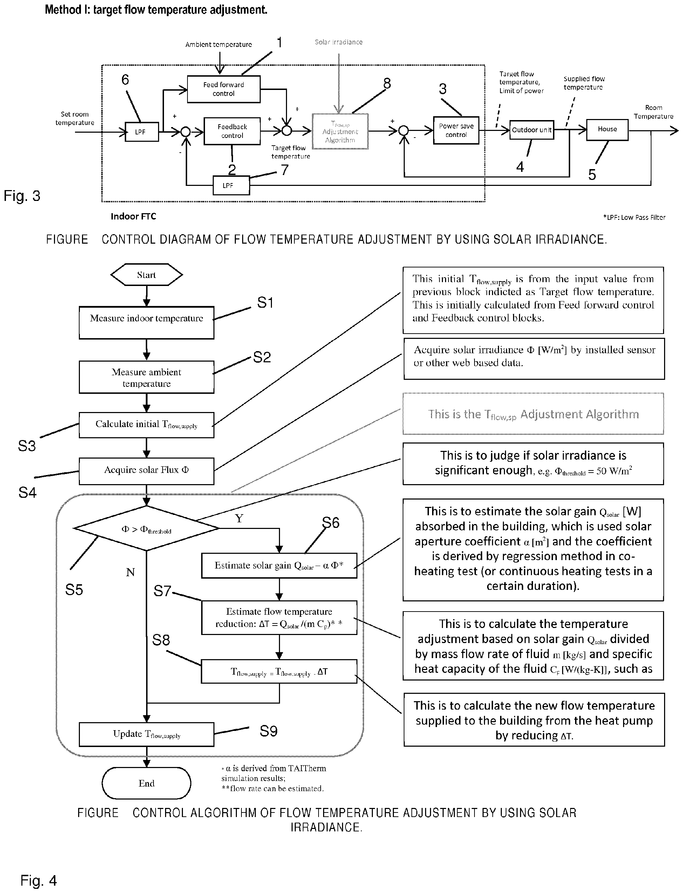

Fig. 3 shows a control diagram of a method for operating a heat pump system according to the invention. The method employs a feed-forward control 1 as well as a feed-back control 2. On the left side a set room temperature enters firstly an optional low pass filter 6 and then enters the feed-forward control 1 where together with a measured ambient temperature a target flow temperature is calculated. The output of the low pass filter 6 is furthermore input into the feed-back control element 2 which also produces a target flow temperature. The target flow temperature provided by the feed-forward control 1 and the feed-back control 2 are combined to a resulting target flow temperature. This resulting target flow temperature is in this embodiment adjusted in step 8 based on a solar irradiance measured by a suitable solar irradiance sensor. Step 8 outputs an adjusted target flow temperature. This adjusted target flow temperature goes through the power safe control 3, the outdoor unit 4 and the house 5 to result in a room temperature. The room temperature is fed back via the low pass filter 7 to the input of the feed-back control so that the difference between the set room temperature output by the low pass filter 6 and the fed back room temperature output by the low pass filter 7 is input into the feed-back control 2.

The Power save control 3 is a function to reduce the compressor frequency fluctuation, in order to smoothen the operation and thus save power consumption due to sudden change of compressor frequency. Outdoor unit 4 is the block of a heat pump outdoor unit with the main refrigeration cycle, which operates in outdoor environment to absorb the low grade energy from the ambient such as air or ground. House 5 is a block representing the building which requires heat supplied from heat pump for maintaining a certain temperature.

Fig. 4 shows a flow diagram of an algorithm carried out in the control diagram of Fig. 3. In a first step S1 an indoor temperature in a room heated by the heat pump is measured. Furthermore, in a step S2 an ambient temperature is measured, which is for example an outdoor temperature. It should be noted that although steps S1 and S2 are shown in a certain sequence in Fig. 4, they can be carried out in different order and also at the same time.

In step S3 an initial temperature $T_{flow, supply}$ is calculated. This initial $T_{flow, supply}$ is provided from the input value from the previous block indicated as target flow temperature in Fig. 3. This value is initially calculated from the feed-forward control block 1 and the feed-back control block 2 in Fig. 3.

In a step S4 a solar flux $\phi$ is acquired, for example by a sensor or by other web based data. A dimension of the solar flux is for example $W/m^2$. It should be noted that in Fig. 4 step S4 is shown after step S3. However, the solar flux $\phi$ could as well be acquired at any other point of the sequence of steps S1, S2 and S3.

The following steps S5, S6, S7, S8 and S9 are carried out in block 8 in Fig. 3.

In step S5 it is decided whether the acquired solar flux $\phi$ is greater than a threshold irradiation, for example $\phi_{threshold} = 50\ W/m^2$. If this is not the case, the target flow temperature $T_{flow, supply}$ is not modified. If, on the other hand, the measured solar flux $\phi$ is greater than the threshold flux $\phi_{threshold}$, step S6 is carried out, where a solar gain $Q_{solar}$ is estimated as $Q_{solar} = \alpha\phi$. In this example, the solar gain $Q_{solar}$ [W] absorbed in the building is estimated. Here, the solar aperture coefficient $\alpha$ $[m^2]$ and the coefficient can be derived, for example, by a regression method in co-heating tests or continuous heating tests of a certain duration.

The estimated solar gain $Q_{solar}$ is then used in step S7 to estimate a flow temperature reduction $\Delta T$ as $\Delta T = Q_{solar} / (mC_p)$. Using this value in step S8, the target flow temperature $T_{flow, supply}$ is adjusted by subtracting the flow temperature reduction $\Delta T$, that is, $T_{flow, supply} := T_{flow, supply} - \Delta T$. In step S9, the target flow temperature is then updated and can be used for the control of the heat pump.

In step S7, the temperature adjustment is calculated based on the solar gain $Q_{solar}$ divided by the mass flow rate of the fluid m [kg/s], and the specific heat capacity of the fluid $C_p$ [J/(kg - K)], such as glycol water.

In step S8, the new flow temperature supplied to the building by the heat pump is reduced by $\Delta T$.

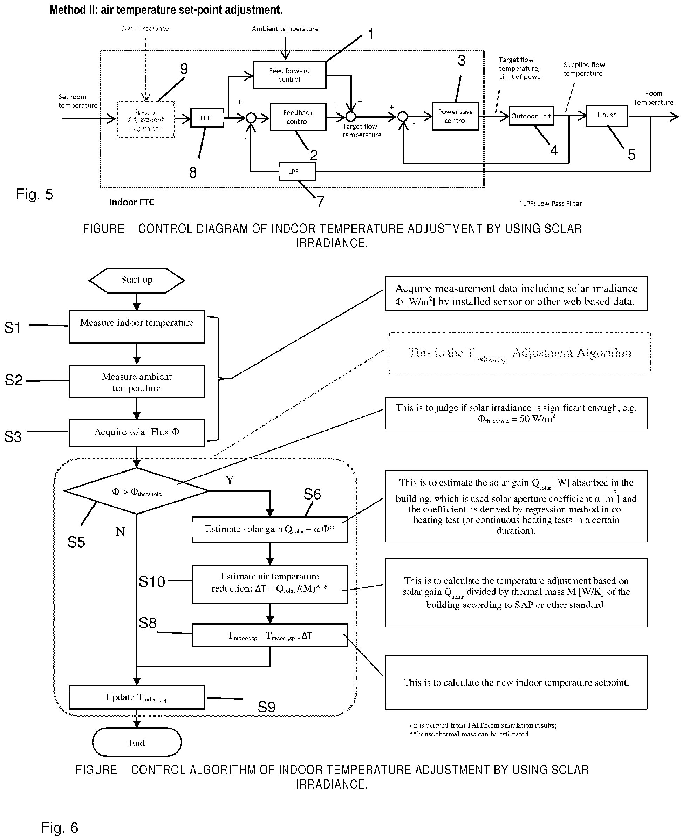

Fig. 5 shows a control diagram of a method for operating a heat pump according to a further embodiment of the invention. Fig. 5 corresponds to Fig. 3, but does not have the block 8 in which the target flow temperature is adjusted in Fig. 3, but instead has an additional block 9 where an indoor temperature set point is adjusted based on acquired solar irradiance. Regarding blocks 1 to 7, reference is made to Fig. 3.

A set temperature is input into the control, and this set temperature is then adjusted in block 9 before being input into the low pass filter 6.

An algorithm carried out in block 9 is shown in Fig. 6. Again, in steps S1, S2, and S4 an indoor temperature in a room to be heated by the heat pump is measured, an ambient temperature, for example an outdoor temperature, is measured, and a solar flux $\phi$ is acquired. Steps S1, S2, S4 can be carried out in any order and also at the same time. Again, the solar irradiance $\phi$ $[W/m^2]$ can, for example, be acquired by an installed sensor or by web-based data.

In step S5 the acquired solar flux $\phi$ is then compared to a threshold $\phi_{threshold}$, for example $\phi_{threshold} = 50\ W/m^2$, in order to judge whether the solar irradiance is sufficiently significant.

If that is the case, in step 6 the solar gain $Q_{solar}$ is estimated as $Q_{solar} = \alpha\phi$. In this embodiment, as also in the other embodiments, $\alpha$ can for example be derived from TAITherm simulation results.

The estimated solar gain $Q_{solar}$ is then used in step S10 to estimate the indoor temperature reduction $\Delta T$ as $\Delta T = Q_{solar} / M$, wherein M [W/K] is the thermal mass of the building, for example according to SAP or some other standard.

Using this temperature reduction $\Delta T$, the indoor temperature set point $T_{indoor, sp}$ is then reduced as $T_{indoor, sp} := T_{indoor, sp} - \Delta T$. The corrected value is then updated in step S9 to be used for the further control of the heat pump as shown in Fig. 5, starting in block 6.

In the case where the heat pump heats the indoor space as well as in the case where the heat pump or air conditioner cools the indoor space, the adjustment of the temperatures will usually be a reduction of these temperatures because the solar radiation adds additional heat into the indoor space.

The utilization of solar gain according to the present invention allows saving energy, as it takes a long time for heat pump controllers according to the prior art to recognize that there is a significant amount of solar gain, as the prior art controllers only measure the indoor temperature. The solar gain is mainly stored in the thermal mass when it arrives in the living space.

The present invention is capable of avoiding overheating, which usually is a problem in conventional heating systems due to the limitation of feedback control and the nature of solar gain to the house. The invention can minimize overheating.

A heat pump such as employed in the present invention can, for example, be an air-to-water (A2W) heat pump or a ground source heat pump (GSHP) or any heat pump incorporating a refrigerant circuit.

**Claims**

1. Method for operating a heat pump system, comprising measuring a solar irradiance incident onto a building,

   and adjust an operation of a heat pump included in the heat pump system based on the measured solar irradiance, wherein the operation of the heat pump is adjusted only when the solar irradiation is larger than a predetermined threshold.

2. Method according to any of the preceding claims, wherein the operation of the heat pump is adjusted using feed forward control and/or feedback control, the method further comprising
   using the measured solar irradiation to adjust, preferably to reduce, at least one of the following quantities entering the feed forward control and/or the feedback control by a temperature correction amount: a target flow temperature of the heat pump, a flow temperature setpoint and/or an air temperature set point of an indoor air temperature.

3. Method according to the preceding claim,
   wherein in the adjusting of the operation of the at least one heat pump the temperature correction amount is determined from the measured solar irradiation using a solar heat gain coefficient, SHGC, method, a Overall Solar Aperture Coefficient Method and/or a Standard Assessment Procedure, SAP.

4. Method according to any of the preceding claims,
   wherein the operating frequency of a compressor included in the heat pump is adjusted to adjust the operation of the heat pump.

5. Method according to any of the preceding claims, wherein the operation of the heat pump is adjusted using feed forward control and/or feedback control,

   wherein the method further comprises
   comparing the measured solar irradiance $\phi$ to a threshold irradiance, if the measured solar irradiance $\phi$ is equal or larger than the threshold irradiance then
   determine a solar gain as $Q_{solar} = \alpha\phi$ , wherein $\alpha$ is a solar aperture coefficient,
   determine a flow temperature reduction as $\Delta T = Q_{solar} / (m\, C_p)$, wherein m is a mass flow rate of a heat transfer fluid of the heat pump system and $C_p$ is a specific heat capacity of the heat transfer medium of the heat pump system
   and adjust the operation of the heat pump by reducing a target flow temperature $T_{flow,\, supply}$ of the heat pump by $\Delta T$.

6. Method according to any of the preceding claims, wherein the operation of the heat pump is adjusted using feed forward control and/or feedback control,

   wherein the method further comprises
   comparing the measured solar irradiance $\phi$ to a threshold irradiance, if the measured solar irradiance $\phi$ is equal or larger than the threshold irradiance then
   determine a solar gain as $Q_{solar} = \alpha\phi$ , wherein $\alpha$ is a solar aperture coefficient,
   determine an air temperature reduction as $\Delta T = Q_{solar} / M$, wherein M is a thermal mass of the building
   and adjust the operation of the heat pump by reducing the indoor temperature set point $T_{indoor\, sp}$ by $\Delta T$.

7. Method according to any of the preceding claims, wherein the solar irradiation is measured by a sensor located on the outside of the building, preferably at a highest point of the building or at a spot of the building having unobstructed view of the sun during the whole day.

8. Method according to any of the preceding claims, wherein the steps of the method are carried out at least once every hour, preferably at least once every 15 minutes, preferably at least once every minute.

9. Heat pump system, comprising

at least one heat pump,
at least one sensor configured for measuring a solar irradiance onto a building,
a controller configured for controlling an operation of the at least one heat pump based on an amount of solar irradiance measured by the at least one solar irradiance sensor for measuring a solar irradiance wherein the controller is configured to adjust an operation of the at least one heat pump only when the solar irradiation is larger than a predetermined threshold.

10. Heat pump system according to claim 9,
wherein the controller is configured to adjust an operating frequency of a compressor included in the at least one heat pump as the operation of the at least one heat pump based on the solar irradiation.

11. Heat pump system according to any of claims 9 or 10, wherein the solar irradiance sensor is a silicon photo cell or a thermopile type sensor.

12. Heat pump system according to any of claims 9 to 11 wherein the heat pump system is configured to carry out a method according to any of claims 2 to 8.

13. HVAC system including a heat pump system according to any of the claims 9 to 12.


**Patentansprüche**

1. Verfahren zum Betreiben eines Wärmepumpensystems, umfassend:

Messen einer auf ein Gebäude einfallenden solaren Einstrahlungsstärke,
und Anpassen eines Betriebs einer im Wärmepumpensystem enthaltenen Wärmepumpe auf der Grundlage der gemessenen solaren Einstrahlungsstärke,
wobei der Betrieb der Wärmepumpe nur angepasst wird, wenn die solare Einstrahlungsstärke größer ist als ein vorherbestimmter Schwellenwert.

2. Verfahren nach einem der vorangehenden Ansprüche, wobei der Betrieb der Wärmepumpe unter Verwendung einer Vorwärtskopplungsregelung und/oder einer Rückwärtskopplungsregelung angepasst wird, wobei das Verfahren ferner umfasst:
Nutzen der gemessenen solaren Einstrahlungsstärke, um zumindest eine der folgenden Größen, die in die Vorwärtskopplungsregelung und/oder die Rückwärtskopplungsregelung einfließen, um einen Temperaturkorrekturbetrag anzupassen, vorzugsweise zu verringern: eine Zielvorlauftemperatur der Wärmepumpe, einen Vorlauftemperatursollwert und/oder einen Lufttemperatursollwert einer Innenraumlufttemperatur.

3. Verfahren nach dem vorangehenden Anspruch,
wobei bei der Anpassung des Betriebs der zumindest einen Wärmepumpe der Temperaturkorrekturbetrag aus der gemessenen solaren Einstrahlungsstärke unter Verwendung eines Verfahrens für den Solarwärme-Zunahmekoeffizienten (SHGC), eines Verfahrens für den Gesamt-Solaraperturkoeffizienten und/oder eines Standardbewertungsverfahrens (SAP) bestimmt wird.

4. Verfahren nach einem der vorangehenden Ansprüche,
wobei die Betriebsfrequenz eines in der Wärmepumpe enthaltenen Verdichters angepasst wird, um den Betrieb der Wärmepumpe anzupassen.

5. Verfahren nach einem der vorangehenden Ansprüche, wobei der Betrieb der Wärmepumpe unter Verwendung einer Vorwärtskopplungsregelung und/oder einer Rückwärtskopplungsregelung angepasst wird,
wobei das Verfahren ferner umfasst:

Vergleichen der gemessenen solaren Einstrahlungsstärke φ mit einer Schwellenwert-Einstrahlungsstärke, falls die gemessene solare Einstrahlungsstärke φ gleich oder größer ist als die Schwellenwert-Einstrahlungsstärke, dann

Bestimmen einer solaren Zunahme als $Q_{solar} = \alpha\varphi$, wobei $\alpha$ ein Solaraperturkoeffizient ist,

Bestimmen einer Vorlauftemperaturreduzierung als $\Delta T = Q_{solar} / (m\ C_p)$, wobei m eine Massendurchsatzrate eines Wärmetransferfluids des Wärmepumpensystems ist, und $C_p$ eine spezifische Wärmekapazität des Wärmetransfermediums des Wärmepumpensystems ist,

und Anpassen des Betriebs der Wärmepumpe durch Reduzieren einer Zielvorlauftemperatur $T_{flow,\ supply}$ der Wärmepumpe um $\Delta T$.

6. Verfahren nach einem der vorangehenden Ansprüche, wobei der Betrieb der Wärmepumpe unter Verwendung einer Vorwärtskopplungsregelung und/oder einer Rückwärtskopplungsregelung angepasst wird, wobei das Verfahren ferner umfasst:

Vergleichen der gemessenen solaren Einstrahlungsstärke φ mit einer Schwellenwert-Einstrahlungsstärke, falls die gemessene solare Einstrahlungsstärke φ gleich oder größer ist als die Schwellenwert-Einstrahlungsstärke, dann

Bestimmen einer solaren Zunahme als $Q_{solar} = \alpha\varphi$, wobei $\alpha$ ein Solaraperturkoeffizient ist,

Bestimmen einer Lufttemperaturreduzierung als $\Delta T = Q_{solar} / M$, wobei M eine thermische Masse des Gebäudes ist,

und Anpassen des Betriebs der Wärmepumpe durch Reduzieren des Innenraumtemperatursollwerts $T_{indoor\ sp}$ um $\Delta T$.

7. Verfahren nach einem der vorangehenden Ansprüche, wobei die solare Einstrahlungsstärke von einem Sensor gemessen wird, der sich an der Außenseite des Gebäudes befindet, vorzugsweise an einem höchsten Punkt des Gebäudes oder an einer Stelle des Gebäudes, welche den ganzen Tag ungehindert der Sonne ausgesetzt ist.

8. Verfahren nach einem der vorangehenden Ansprüche, wobei die Schritte des Verfahrens zumindest einmal pro Stunde, vorzugsweise zumindest einmal alle 15 Minuten, vorzugsweise zumindest einmal pro Minute durchgeführt werden.

9. Wärmepumpensystem, umfassend:

zumindest eine Wärmepumpe,

zumindest einen Sensor, der eingerichtet ist, eine auf ein Gebäude einfallende solare Einstrahlungsstärke zu messen,

eine Steuereinheit, die eingerichtet ist, einen Betrieb der zumindest einen Wärmepumpe auf der Grundlage eines solaren Einstrahlungsstärkebetrags, der von dem zumindest einen Sensor für die solare Einstrahlungsstärke zur Messung einer solaren Einstrahlungsstärke gemessen wird, zu steuern, wobei die Steuereinheit eingerichtet ist, einen Betrieb der zumindest einen Wärmepumpe nur dann anzupassen, wenn die solare Einstrahlungsstärke größer ist als ein vorherbestimmter Schwellenwert.

10. Wärmepumpensystem nach Anspruch 9, wobei die Steuereinheit eingerichtet ist, eine Betriebsfrequenz eines in der zumindest einen Wärmepumpe enthaltenen Verdichters als den Betrieb der zumindest einen Wärmepumpe auf der Grundlage der solaren Einstrahlungsstärke anzupassen.

11. Wärmepumpensystem nach einem der Ansprüche 9 oder 10, wobei der Sensor für die solare Einstrahlungsstärke eine Silizium-Fotozelle oder ein Sensor vom Thermopile-Typ ist.

12. Wärmepumpensystem nach einem der Ansprüche 9 bis 11, wobei die Steuereinheit eingerichtet ist, ein Verfahren nach einem der Ansprüche 2 bis 8 auszuführen.

13. HVAC-System, umfassend ein Wärmepumpensystem nach einem der Ansprüche 9 bis 12.

**Revendications**

1. Procédé pour faire fonctionner un système de pompe à chaleur, comprenant les étapes consistant à

  mesurer une irradiation solaire incidente sur un bâtiment,
  et ajuster un fonctionnement d'une pompe à chaleur incluse dans le système de pompe à chaleur sur la base de l'irradiation solaire mesurée,
  dans lequel le fonctionnement de la pompe à chaleur est ajusté uniquement lorsque l'irradiation solaire est supérieure à un seuil prédéterminé.

2. Procédé selon l'une quelconque des revendications précédentes, dans lequel le fonctionnement de la pompe à chaleur est ajusté à l'aide de la commande anticipative et/ou de la commande à rétroaction, le procédé comprenant en outre l'étape consistant à
  utiliser l'irradiation solaire mesurée pour ajuster, de préférence pour réduire, au moins l'une des quantités suivantes entrant dans la commande anticipative et/ou la commande à rétroaction par une quantité de correction de température : une température d'écoulement cible de la pompe à chaleur, un point de consigne de température d'écoulement et/ou un point de consigne de température d'air d'une température d'air intérieur.

3. Procédé selon l'une quelconque des revendications précédentes,
  dans lequel, lors de l'ajustement du fonctionnement de l'au moins une pompe à chaleur, la quantité de correction de température est déterminée à partir de l'irradiation solaire mesurée en utilisant un procédé à coefficient de gain de chaleur solaire, SHGC, un procédé à coefficient d'ouverture solaire global et/ou une procédure d'évaluation standard, SAP.

4. Procédé selon l'une quelconque des revendications précédentes,
  dans lequel la fréquence de fonctionnement d'un compresseur inclus dans la pompe à chaleur est ajustée pour ajuster le fonctionnement de la pompe à chaleur.

5. Procédé selon l'une quelconque des revendications précédentes, dans lequel le fonctionnement de la pompe à chaleur est ajusté à l'aide de la commande anticipative et/ou de la commande à rétroaction,

  dans lequel le procédé comprend en outre les étapes consistant à
  comparer l'irradiation solaire mesurée $\Phi$ à une irradiation de seuil,
  si l'irradiation solaire mesurée $\Phi$ est égale ou supérieure à l'irradiation de seuil, alors
  déterminer un gain solaire tel que $Q_{solar} = \alpha\Phi$, dans lequel $\alpha$ est un coefficient d'ouverture solaire,
  déterminer une réduction de température d'écoulement telle que $\Delta T = Q_{solar}/(m\ C_p)$, dans lequel m est un débit massique d'un fluide de transfert thermique du système de pompe à chaleur et $C_p$ est une capacité thermique spécifique du milieu de transfert thermique du système de pompe à chaleur
  et ajuster le fonctionnement de la pompe à chaleur en réduisant une température d'écoulement cible $T_{flow,\ supply}$ de la pompe à chaleur par $\Delta T$.

6. Procédé selon l'une quelconque des revendications précédentes, dans lequel le fonctionnement de la pompe à chaleur est ajusté à l'aide de la commande anticipative et/ou de la commande à rétroaction,

  dans lequel le procédé comprend en outre les étapes consistant à
  comparer l'irradiation solaire mesurée $\Phi$ à une irradiation de seuil, si l'irradiation solaire mesurée $\phi$ est égale ou supérieure à l'irradiation de seuil, alors
  déterminer un gain solaire tel que $Q_{solar} = \alpha\Phi$, dans lequel $\alpha$ est un coefficient d'ouverture solaire,
  déterminer une réduction de la température d'air telle que $\Delta T = Q_{solar}/ M$, dans laquelle M est une masse thermique du bâtiment
  et ajuster le fonctionnement de la pompe à chaleur en réduisant le point de consigne de température intérieure $T_{indoor\ sp}$ par $\Delta T$.

7. Procédé selon l'une quelconque des revendications précédentes, dans lequel l'irradiation solaire est mesurée par un capteur situé à l'extérieur du bâtiment, de préférence à un point le plus élevé du bâtiment ou à un endroit du bâtiment présentant une vue dégagée du soleil pendant toute la journée.

8. Procédé selon l'une quelconque des revendications précédentes, dans lequel les étapes du procédé sont effectuées au moins une fois par heure, de préférence au moins une fois toutes les 15 minutes, de préférence au moins une fois toutes les minutes.

9. Système de pompe à chaleur, comprenant

au moins une pompe à chaleur,
au moins un capteur configuré pour mesurer une irradiation solaire sur un bâtiment,
un dispositif de commande configuré pour commander un fonctionnement de la au moins une pompe à chaleur sur la base d'une quantité d'irradiation solaire mesurée par le au moins un capteur de rayonnement solaire pour mesurer une irradiation solaire, dans lequel le dispositif de commande est configuré pour ajuster un fonctionnement de la au moins une pompe à chaleur uniquement lorsque l'irradiation solaire est supérieure à un seuil prédéterminé.

10. Système de pompe à chaleur selon la revendication 9,
dans lequel le dispositif de commande est configuré pour ajuster une fréquence de fonctionnement d'un compresseur inclus dans la au moins une pompe à chaleur en tant que fonctionnement de la au moins une pompe à chaleur sur la base de l'irradiation solaire.

11. Système de pompe à chaleur selon l'une quelconque des revendications 9 ou 10, dans lequel le capteur d'irradiation solaire est une cellule photoélectrique en silicium ou un capteur de type thermopile.

12. Système de pompe à chaleur selon l'une quelconque des revendications 9 à 11, dans lequel le système de pompe à chaleur est configuré pour mettre en oeuvre un procédé selon l'une quelconque des revendications 2 à 8.

13. Système CVC comprenant un système de pompe à chaleur selon l'une quelconque des revendications 9 à 12.

**Fig. 1**

**Fig. 2**

**Method I: target flow temperature adjustment.**

Fig. 3

FIGURE   CONTROL DIAGRAM OF FLOW TEMPERATURE ADJUSTMENT BY USING SOLAR IRRADIANCE.

FIGURE   CONTROL ALGORITHM OF FLOW TEMPERATURE ADJUSTMENT BY USING SOLAR
IRRADIANCE.

Fig. 4

**Method II: air temperature set-point adjustment.**

Fig. 5

FIGURE   CONTROL DIAGRAM OF INDOOR TEMPERATURE ADJUSTMENT BY USING SOLAR
IRRADIANCE.

FIGURE   CONTROL ALGORITHM OF INDOOR TEMPERATURE ADJUSTMENT BY USING SOLAR
IRRADIANCE.

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018199167 A1
- US 20190030992 A1
- US 5765383 A

**Non-patent literature cited in the description**

- ASHRAE Research, ASHRAE Handbook-Fundamentals. ASHRAE, 2017
- **P. BAKER.** A retrofit of a Victorian terrace house in New Bolsover: a whole house thermal performance assessment. Historic England & Glasgow Caledonian University, 2015
- The Government's Standard Assessment Procedure for Energy Rating of Dwellings (SAP 2012). BRE, 2012